# EUROPEAN PATENT SPECIFICATION

(11) **EP 1 952 185 B1**
(45) Date of publication and mention of the grant of the patent: **10.12.2014**
(21) Application number: 06824246.0
(22) Date of filing: 03.11.2006
(51) Int. Cl.: G02B 5/20, B41J 3/407

(54) **METHOD AND APPARATUS FOR MANUFACTURING A COLOR FILTER AND/OR A BLACK MATRIX**
VERFAHREN UND VORRICHTUNG ZUM HERSTELLEN EINES FARBFILTERS UND/ODER EINER SCHWARZMATRIX
PROCÉDÉ ET DISPOSITIF DE FABRICATION D'UN FILTRE DE COULEUR ET/OU D'UNE MATRICE NOIRE

(30) Priority: 04.11.2005 NL 1030357
(43) Date of publication of application: 06.08.2008
(73) Proprietor: OLED Technologies & Solutions B.V., 6416 SG Heerlen (NL)
(72) Inventor: SMITS, Rutger Willem Frans, NL-6134 AH Sittard (NL); VAN RENS, Bas Jan Emile, NL-5691 ZK Son (NL); EVERS, Marinus Franciscus Johannes, NL-5591 JM Heeze (NL)
(74) Representative: Hatzmann, Martin
(86) International application number: PCT/NL2006/000551
(87) International publication number: WO 2007/053014

(56) References cited:
- EP-A- 1 351 325
- EP-A- 1 452 891
- US-A- 5 847 720
- US-A1- 2003 207 198
- US-B1- 6 221 544
- PATENT ABSTRACTS OF JAPAN vol. 2000, no. 24, 11 May 2001 (2001-05-11) -& JP 2001 183514 A (CANON INC), 6 July 2001 (2001-07-06)

## Description

The invention relates to a method for manufacturing a color filter and/or a black matrix, wherein a liquid is deposited on a substrate with the aid of an inkjet printhead.

In the case of color filters, the liquid is generally a dye which transmits only a part of the visible spectrum, such as for instance red, blue, green or the like. In the case of a black matrix, the liquid is generally a black, non-light-transmitting liquid.

Such a method is known from practice. Color filters can be manufactured by means of inkjet printing of dyes on a substrate. For this, the substrate may be provided with a relief structure, after which the printhead is aligned with respect to the substrate on the basis of that structure. The inkjet printhead then deposits an amount of ink within the relief structure. An advantage of inkjet printing of color filters over other methods for manufacturing color filters is that inkjet printing comprises fewer production steps. However, less favorable is that, if the color filter manufactured in this manner becomes part of a display, it may occur that, after placement on the display, the separate areas filled with ink are not exactly in the right position with respect to the luminous elements from the display. This can result in areas without ink on the display, so-called white areas, so that the display is rejected. It can also result in areas where the wrong color, at least a different color from what was intended, is located above particular luminous elements, which leads to color deviations in the display. It is also possible that undesired mixing of ink of different colors occurs. These problems reduce the quality of the display, so that it is rejected. This is particularly unfavorable to the production costs of the displays.

In the production of a black matrix, providing the black liquid in the right position is also very important. This is because, when the black matrix liquid is located above the luminous elements, instead of between them, the light intensity of the display will decrease and the quality of the image formed by the display will be adversely affected.

EP-A-1,351,325 discloses a method for manufacturing a display comprising a substrate on which a structure, such as, for instance, a matrix structure in relief, is provided, which structure bounds a number of areas, wherein, with the aid of an inkjet printhead, substantially in each area an amount of liquid is deposited. The method disclosed by EP'325 is characterized in that with the aid of at least one sensor a measurement is performed on the substrate to determine the position of a respective area, and in that on the basis of the thus determined position the printhead is controlled to deliver an amount of liquid at the correct place. The at least one sensor may perform a measurement on the structure provided in relief, or on a reference structure extending adjacent or between the area-defining structure. EP'325 further discloses an apparatus with a table for placing a substrate thereon, with an inkjet printhead for delivering liquid at a desired time, and with a displacement assembly for displacing the printhead relative to the substrate. The apparatus according to EP'325 is characterized by at least one sensor for observing a structure provided on the substrate, and a control for processing the signals produced by the at least one sensor, for controlling the displacement of the displacement assembly and for timing the delivery of liquid by the printhead on the basis of the signal produced by the at least one sensor.

From US 2003108804, it is known to manufacture a color filter by means of inkjet printing, while the alignment of the printhead takes place on the basis of a black matrix provided on a substrate. After that, a homogenous light source is placed on the back side of the substrate so that light shines through the substrate. A light sensor measures the light intensity of the light which comes through the substrate and converts this into a signal with which the position of the printhead can be corrected. An advantage thereof is that the printhead can be adjusted in real time, so that the inkjet printing takes place very accurately. Further, the position of the substrate with respect to the printhead is known at all times, just like the center of the matrix structure on the substrate. A drawback of this method is that the substrate needs to be provided with a black matrix which is provided in a separate processing step. In addition, it may be found in practice that the positions of luminous pixels of a display on which the color filter is to be provided do not correspond with the black matrix provided on the substrate of the color filter and consequently with the filter liquid later provided on the substrate. As a result, the alignment may deviate somewhat, which may cause color deviations in the display. As appears from the above, the manufacture of a color filter and/or a black matrix is a complicated process. However, color filters are used more and more, one of the growing fields of application being the use of color filters in displays. It is clear that it would be favorable if the production costs fell.

It is the object of the present invention to provide a method for manufacturing color filters and/or black matrices where the depositing of the liquid in each area takes place very accurately, without any changes in shape or changes in position of the areas causing deviations in the color filter or the black matrix, while the manufacturing of the color filter or the black matrix consists of as few production steps as possible and while the manufacturing costs are minimized.

To this end, the invention provides a method for manufacturing a color filter and/or black matrix, where a liquid is deposited on a substrate with the aid of an inkjet printhead, while the position of the liquid deposition is determined in that a matrix of luminous elements is arranged under the substrate, while one or a group of luminous elements of the matrix of luminous elements is switched on, so that they light up, while the position of the luminous element or the group of luminous elements is observed, and while the position of the liquid deposition is determined depending on the observed position of the at least one luminous element or the group of luminous elements.

An advantage thereof is that the printhead is always aligned exactly in the right position with the aid of the luminous elements and each drop can be deposited exactly in the right place. In the control of the inkjet printhead, preferably, an expected pattern is stored of the luminous elements. The luminous elements which are switched on individually or in groups provide the inkjet printhead control with a reference on the basis whereof the expected position based on the stored pattern and the actual position are in each case compared, so that, in the control, an accurate picture is created of the actual position of the luminous elements. The liquid, which may, for instance, be a red, blue or green dye will end up exactly above the desired element - for instance the luminous element itself or an element located in the vicinity thereof - so that the creation of color deviations is prevented. In case of black matrix production, the liquid, which will generally comprise a black ink, will be deposited exactly between the luminous elements, so that luminous elements are prevented from being covered with non-light-transmitting liquids. Due to the fact that, with the method according to the invention, measuring takes place on the basis of the luminous elements, to the control of the printhead and the nozzles, it is accurately known where the areas are located and at which moment the printhead is to be controlled to deposit an amount of liquid. Further, any skewness of the substrate with respect to the production apparatus will hardly adversely affect the printing accuracy. After all, the luminous elements can be observed in real time and, on the basis thereof, the position can be determined to deposit the liquid, so that, for instance, a skewness of the substrate can be compensated by correct control of the inkjet printhead. The observation of the luminous elements may, for instance, take place with one or a series of light sensors. Under the influence of, for instance, temperature variations in the substrate or mechanical inaccuracies, changes in shape may occur. This can be unfavorable for fitting the color filter or the black matrix on, for instance, a display. When deviating shapes and sizes of the substrate have been created, on the basis of the information provided by the at least one light sensor, the control will control the printhead and the nozzles so that the liquid still ends up in the right position. A great advantage of the method according to the invention is further that, with the aid of the same apparatus, both a color filter and a black matrix can be manufactured. This may be realized in a same production step or in a number of successive production steps. In any case, the substrate does not need to be taken from the apparatus, which has a favorable influence on the transport movements the substrate needs to be subjected to.

According to a further elaboration of the invention, the substrate is a layer of a display and where the luminous elements are part of the display to be provided with the color filter and/or black matrix. An advantage thereof is particularly the minimal tolerance build-up. Since the substrate as such itself indicates where the printhead needs to deposit the liquid, deviations of the deposited liquid amounts with respect to the location of the luminous elements will be minimal. As a result, color deviations or undesired coverings of luminous elements with black matrix liquid are prevented and the production of a display with color filter and/or black matrix is particularly efficient. This results in a shorter production time and fewer deviations in the production, so that a higher yield is obtained, which is of course particularly favorable to the height of the production costs.

According to a further elaboration of the invention, the substrate comprises a transparent element which is, after depositing the liquid thereon, placed on a display, while the structure of luminous elements is part of a production apparatus for color filters and/or black matrices. For instance, in the production apparatus, a part of a substrate support can be formed by a display of the type for which the filter to be produced and/or the black matrix to be produced is intended. This implies that the color filter and/or the black matrix is located exactly above the respective luminous elements and has an optimal match with the display; this in contrast to when a color filter and/or the black matrix and a display have been manufactured independently of one another on two different production apparatuses. This is because the colored areas on the substrate are located exactly above the luminous elements, the pixels, of the display. During assembly of the display and the corresponding color filter, there will be few rejects because few deviations occur.

According to a further elaboration of the invention, only those luminous elements are switched on above which filter liquid is to be deposited. Since the light sensor responds to the switching on of the luminous elements, the position of the luminous element can be determined unambiguously.

According to a further elaboration of the invention, the luminous elements are only switched on shortly before and during the liquid deposition above that respective element. The lighting up of the elements is necessary for detection by the light sensor, which is preferably coupled directly to the printhead, so that the light sensor can pass on the relative position of the luminous element to the printhead. The luminous elements can be switched off after which then the next luminous elements can be switched on and the printhead can move to the next deposition position.

As already mentioned hereinabove, it is preferred that the observation of the luminous element or the group of luminous elements takes place with the aid of at least one light sensor which is provided on the inkjet printhead. Due to the fact that the light sensor is provided on the inkjet printhead, there is a fixed and direct relation between the measuring device and the nozzles of the inkjet printhead. This is very favorable to the positioning accuracy of the deposition of the liquid.

According to a further elaboration of the invention, the at least one light sensor delivers a signal to the position regulation or control of the printhead and/or the nozzle for control of the printhead and/or the nozzle. The printhead is controlled directly on the basis of information observed and passed on by the light sensor. As a result, the printhead responds very directly, in real time and can quickly adjust so that the right position for the deposition is obtained. During the production, disturbances or influences from the outside which influence the exact position of the areas where liquid is to be deposited can occur. The light sensor will observe the changed position and translate it to an adjustment of the position of the printhead.

In one embodiment of the method according to the invention, after the liquid deposition, the position of the deposited liquid is checked with the same sensors or with additional sensors, which are provided on the inkjet printhead.

Optionally, depending on the check, a second amount of liquid can be deposited in order to obtain a desired liquid deposition pattern on the substrate. With such a method, errors can be corrected during the production process, so that the yield of the process improves.

In addition to the above-described method, the invention also relates to an apparatus for carrying out the above-described method, while the apparatus is provided with a support for placing a substrate thereon, an inkjet printhead for supplying liquid at a desired moment, and with a displacement assembly for displacing the printhead with respect to the substrate. According to the invention, the apparatus is characterized in that it comprises at least one light sensor for observation of switched-on luminous elements, and a control for processing the signals delivered by the at least one light sensor, for regulating displacement of a displacement assembly and for timing the supply of the filter liquid by the printhead on the basis of the signal delivered by the at least one light sensor.

The present invention will be explained in more detail with reference to the different Figures:
Fig. 1 shows a schematic perspective view of an apparatus comprising a substrate with thereabove a printhead moving with respect thereto.
Figs. 2 and 3 show two other exemplary embodiments of the invention.

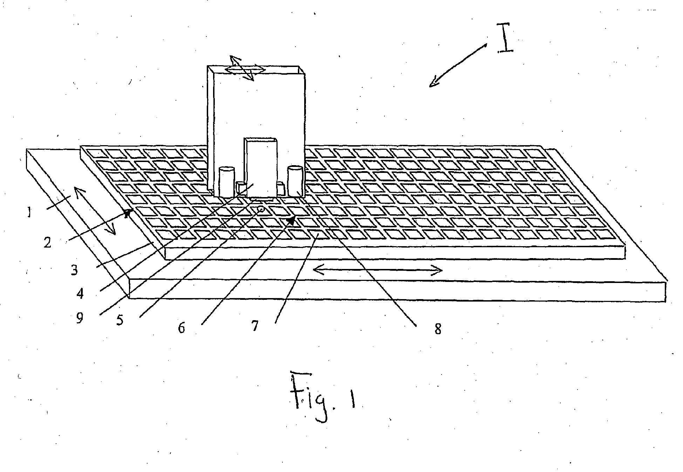

Fig. 1 shows a production apparatus I, in which a color filter 2 is manufactured. On the support 1 of the apparatus I, a substrate 3 is placed. With the aid of the inkjet printhead 4, a liquid 5 is deposited on the substrate 3. The liquid may be a dye for forming a color filter or a black liquid for forming a black matrix. The position of the liquid deposition is determined in that, under the substrate 3, a matrix structure 6 of luminous elements 7 is arranged which can be or have been switched on individually or in groups during the liquid deposition. The printhead 4 is provided with at least one light sensor 8 for observing the luminous elements 7, while the position of the liquid deposition is determined depending on the observed position of the luminous element 7 or the group of luminous elements 7. The substrate 3 is from a transparent material, in this exemplary embodiment glass. The matrix structure 6 with luminous elements 7 ensures the correct positioning of the printhead 4. If a luminous element 7 is switched on, than it will emit a white light. The light sensor 8, which is attached in a fixed position with respect to the printhead 4, will observe this light and deliver a signal to the printhead 4 and/or the nozzle 9. As a result, the printhead 4 will deposit an amount of liquid 5 exactly above the correct luminous element 7 in case of color filter production, and exactly between the luminous elements 7 in case of black matrix production. The printhead 4 may comprise one or more nozzles 9 which deposit liquid 5, for instance a dye, on the substrate 3 at the desired moment. If the printhead 4 comprises multiple nozzles 9, the printhead 4 can also print multiple dyes 5 simultaneously, such as red, green and blue, for the benefit of the color filter and optionally black for the benefit of the black matrix. It is also possible to add white as an extra "color" to further increase the brightness. These nozzles 9 arranged next to one another can substantially simultaneously provide a number of areas with a dye 5. On the substrate 3, a relief structure may be provided which delimits the separate areas provided with a dye 5, so that running of the dye 5 from different areas and undesired spreading out of the dye 5 is prevented.

The printhead 4 can be displaced in the transverse direction and/or the longitudinal direction with respect to the support 1. This can be realized by displacing either the support 1 or the printhead 4.

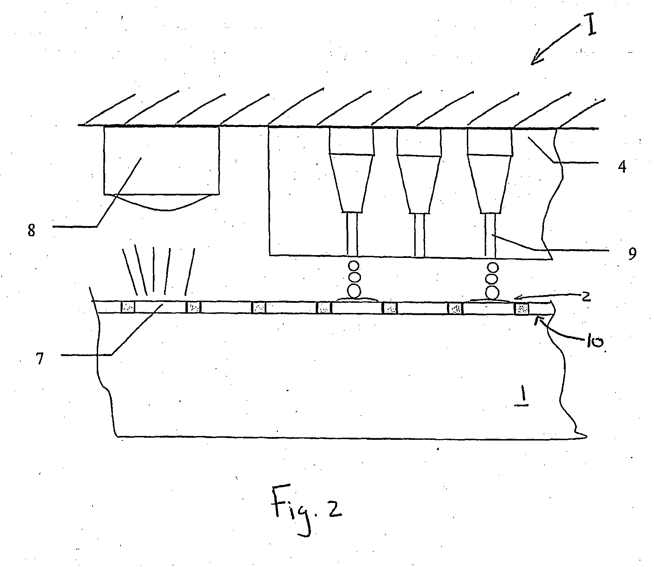

Fig. 2 shows another exemplary embodiment of the invention. This Figure also shows a production apparatus I in which a color filter 2 and/or a black matrix is manufactured. On the support 1 of the production apparatus I, there is a display 10. This display is manufactured in an earlier production step. The display 10 is then fixed in the production apparatus 1. In this exemplary embodiment, the luminous elements 7 from the matrix structure 6 of the display 10 activate the sensor 8, while, on the basis of the position of the luminous elements 7, this sensor passes on signals to the printhead 4 so that it can adjust its position. The color filter 2 and/or the black matrix is printed directly on the display 10, so that the dye areas of the color filter 2 are exactly above the luminous elements or pixels 7 of the display 10 and/or the black ink for the benefit of the black matrix is exactly between the luminous elements 7.

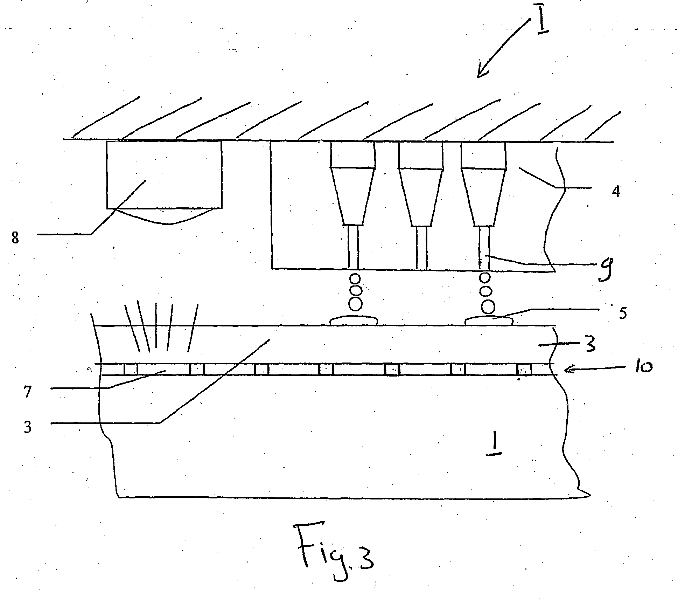

Fig. 3 shows a third exemplary embodiment of the invention. In this exemplary embodiment, a display 10 is fixed on the support 1 of the production apparatus I. The pixels 7 of the display 10 are switched on to control the printhead 4. However, on the display 10, a transparent substrate 3 has been placed, on which the color filter 2 is printed. When a pixel 7 lights up, the printhead 4 will deposit dye 5 on the substrate 3. The color filter 2 manufactured in this manner fits exactly on the display 10 when this is assembled at a later time in the production process.

It will be clear that the invention is not limited to the exemplary embodiments described but that various modifications are possible within the framework of the invention as defined by the claims. This includes *inter alia* apparatuses and methods for manufacturing a color filter where different types of printheads are used. Use of multiple sensors on one printhead is also one of the possibilities. Of course, the invention is also applicable for inkjet printing of different liquids from dyes.

## Claims

1. A method for manufacturing a color filter (2) and/or a black matrix, wherein a liquid (5) is deposited on a substrate (3) with the aid of an inkjet printhead (4), **characterized in that** the position of the liquid deposition is determined **in that** a matrix (6) of luminous elements (7) is arranged under the substrate (3), wherein one or a group of luminous elements of the matrix of luminous elements is switched on, so that they light up, wherein the position of the luminous element or the group of luminous elements is observed, and wherein the position of the liquid deposition is determined depending on the observed position of the at least one luminous element (7) or the group of luminous elements.

2. A method according to claim 1, wherein the substrate (3) is a layer of a display (10) and wherein the luminous elements (7) are part of the display (10) to be provided with the color filter (2) and/or black matrix.

3. A method according to claim 1, wherein the substrate (3) comprises a transparent element which, after depositing the liquid (5) thereon, is placed on a display, wherein the structure of luminous elements (7) is part of a production apparatus (I) for color filters (2) and/or black matrices.

4. A method according to any one of the preceding claims, wherein only those luminous elements (7) are switched on above which filter liquid (5) or next to which ink for forming the black matrix, respectively, is to be deposited.

5. A method according to any one of the preceding claims, wherein the luminous elements (7) are switched on only shortly before and during the liquid deposition above that respective element.

6. A method according to any one of the preceding claims, wherein the luminous elements (7) of the matrix structure (6) of the substrate (3) emit white light.

7. A method according to any one of the preceding claims, wherein the substrate (3) is from glass.

8. A method according to any one of the preceding claims, wherein the observation of the luminous element or the group of luminous elements takes place with the aid of at least one light sensor provided on the inkjet printhead.

9. A method according to claim 8, wherein the at least one light sensor (8) delivers a signal to the printhead (4) and/or the nozzle (9) for control of the printhead (4) and/or the nozzle (9).

10. A method according to claim 8 or 9, wherein, after the liquid deposition, the position of the deposited liquid is checked with the same sensors (8) or with additional sensors provided on the inkjet printhead (4).

11. A method according to claim 10, wherein, depending on the check, a second amount of liquid is deposited in order to obtain a desired liquid deposition pattern on the substrate (3).

12. An apparatus (I) for carrying out the method according to any one of the preceding claims, wherein the apparatus (I) is provided with a support (1) for placing a substrate (3) thereon, an inkjet printhead (4) for supplying liquid (5) at a desired moment, and with a displacement assembly for displacing the printhead (4) with respect to the substrate (3), **characterized in that** the apparatus comprises at least one light sensor (8) for observation of switched-on luminous elements (7), and a control for processing the signals delivered by the at least one light sensor (8), for regulating displacement of the displacement assembly and for timing the supply of the liquid (5) by the printhead (4) on the basis of the signal delivered by the at least one light sensor (8).

13. An apparatus (I) according to claim 12, wherein the position of the at least one light sensor (8) is fixed with respect to the printhead (4).

14. An apparatus (I) according to any one of claims 12-13, wherein the printhead (4) comprises at least one nozzle (9).

15. An apparatus (I) according to any one of claims 12-14, wherein the displacement assembly is arranged for displacing the printhead (4) with respect to the substrate (3), wherein either the printhead (4) or the support (1) is displaceable.

16. An apparatus (I) according to any one of claims 12-15, wherein the printhead (4) is provided with a number of nozzles (9) arranged next to one another, such that a number of areas can be filled substantially simultaneously.

17. An apparatus (I) according to any one of claims 12-16, wherein the printhead (4) is displaceable in the transverse direction with respect to the substrate (3) by displacement of either the printhead (4) or the support (1).

18. An apparatus (I) according to any one of claims 12-17, wherein the printhead (4) is displaceable in the longitudinal direction with respect to the substrate (3) by displacement of either the printhead (4) or the support (1).

19. An apparatus according to any one of claims 12-15, wherein the printhead (4) is provided with sensors for observing the position of the deposited liquid as a check thereof.

20. An apparatus according to claim 19, provided with a control arranged for, depending on the check, depositing a second amount of liquid in order to obtain a desired liquid deposition pattern.

## Patentansprüche

1. Verfahren zur Herstellung eines Farbfilters (2) und/oder einer Schwarzmatrix, wobei eine Flüssigkeit (5) mithilfe eines Tintenstrahl-Druckkopfes (4) auf einem Substrat (3) aufgebracht wird, **dadurch gekennzeichnet**, das die Position der Flüssigkeitsaufbringung bestimmt wird, indem eine Matrix (6) von Leuchtelementen (7) unter dem Substrat (3) angeordnet ist, wobei ein Leuchtelement oder eine Gruppe von Leuchtelementen der Matrix von Leuchtelementen so eingeschaltet wird, dass sie aufleuchten, wobei die Position des Leuchtelements oder der Gruppe von Leuchtelementen beobachtet wird, und wobei die Position der Flüssigkeitsaufbringung in Abhängigkeit zu der beobachteten Position des mindestens einen Leuchtelements (7) oder der Gruppe von Leuchtelementen bestimmt wird.

2. Verfahren nach Anspruch 1, wobei das Substrat (3) eine Schicht von einer Anzeige (10) ist und wobei die Leuchtelemente (7) Teil der mit dem Farbfilter (2) und/oder der Schwarzmatrix zu versehenden Anzeige (10) sind.

3. Verfahren nach Anspruch 1, wobei das Substrat (3) ein transparentes Element umfasst, das, nachdem die Flüssigkeit (5) darauf aufgebracht wurde, auf einer Anzeige platziert wird, wobei die Struktur von Leuchtelementen (7) Teil einer Produktionsvorrichtung (1) für Farbfilter (2) und/oder Schwarzmatrizen ist.

4. Verfahren nach einem der vorhergehenden Ansprüche, wobei nur jene Leuchtelemente (7) eingeschaltet werden, über denen Filterflüssigkeit (5) bzw. neben denen Tinte zum Bilden der Schwarzmatrix abgesetzt werden soll.

5. Verfahren nach einem der vorhergehenden Ansprüche, wobei die Leuchtelemente (7) erst kurz vor und während der Flüssigkeitsaufbringung über dem jeweiligen Element eingeschaltet werden.

6. Verfahren nach einem der vorhergehenden Ansprüche, wobei die Leuchtelemente (7) der Matrixstruktur (6) des Substrats (3) weißes Licht abgeben.

7. Verfahren nach einem der vorhergehenden Ansprüche, wobei das Substrat (3) aus Glas ist.

8. Verfahren nach einem der vorhergehenden Ansprüche, wobei die Beobachtung des Leuchtelements oder der Gruppe von Leuchtelementen mithilfe von mindestens einem auf dem Tintenstrahl-Druckkopf bereitgestellten Lichtsensor stattfindet.

9. Verfahren nach Anspruch 8, wobei der mindestens eine Lichtsensor (8) ein Signal an den Druckkopf (4) und/oder die Düse (9) abgibt, um den Druckkopf (4) und/oder die Düse (9) zu steuern.

10. Verfahren nach Anspruch 8 oder 9, wobei die Position der abgesetzten Flüssigkeit nach der Flüssigkeitsaufbringung mit denselben Sensoren (8) oder mit zusätzlichen Sensoren, bereitgestellt auf dem Tintenstrahl-Druckkopf (4), geprüft wird.

11. Verfahren nach Anspruch 10, wobei, je nach der Prüfung, eine zweite Menge der Flüssigkeit aufgebracht wird, um ein gewünschtes Flüssigkeitsaufbringungsmuster auf dem Substrat (3) zu erhalten.

12. Vorrichtung (I) zum Ausführen des Verfahrens nach einem der vorhergehenden Ansprüche, wobei die Vorrichtung (I) mit einem Träger (1), um darauf ein Substrat (3) anzubringen, einem Tintenstrahl-Druckkopf (4) zum Zuführen von Flüssigkeit (5) zu einem gewünschten Zeitpunkt und mit einer Verschiebungsanordnung zum Verschieben des Druckkopfes (4) in Bezug auf das Substrat (3) versehen ist, **dadurch gekennzeichnet, dass** die Vorrichtung mindestens einen Lichtsensor (8) zum Beobachten von eingeschalteten Leuchtelementen (7) und eine Steuerung zum Verarbeiten der Signale, ausgegeben von dem mindestens einen Lichtsensor (8) umfasst, um das Verschieben der Verschiebungsanordnung und das Timing der Zufuhr der Flüssigkeit (5) durch den Druckkopf (4) anhand des von dem mindestens einen Lichtsensor (8) ausgegebenen Signals zu regeln.

13. Vorrichtung (I) nach Anspruch 12, wobei die Position des mindestens einen Lichtsensors (8) in Bezug auf den Druckkopf (4) ortsfest ist.

14. Vorrichtung (I) nach einem der Ansprüche 12-13, wobei der Druckkopf (4) mindestens eine Düse (9) umfasst.

15. Vorrichtung (I) nach einem der Ansprüche 12-14, wobei die Verschiebungsanordnung zum Verschieben des Druckkopfes (4) in Bezug auf das Substrat (3) angeordnet ist, wobei entweder der Druckkopf (4) oder der Träger (1) verschiebbar ist.

16. Vorrichtung (I) nach einem der Ansprüche 12-15, wobei der Druckkopf (4) mit einer Anzahl von Düsen (9) versehen ist, die so nebeneinander angeordnet sind, dass eine Anzahl von Bereichen im Wesentlichen gleichzeitig gefüllt werden können.

17. Vorrichtung (I) nach einem der Ansprüche 12-16, wobei der Druckkopf (4) in Querrichtung zum Substrat (3) durch Verschieben von entweder dem Druckkopf (4) oder dem Träger (1) verschiebbar ist.

18. Vorrichtung (I) nach einem der Ansprüche 12-17, wobei der Druckkopf (4) in Längsrichtung in Bezug auf das Substrat (3) durch Verschieben von entweder dem Druckkopf (4) oder dem Träger (1) verschiebbar ist.

19. Vorrichtung nach einem der Ansprüche 12-15, wobei der Druckkopf (4) mit Sensoren zum Beobachten der Position der abgesetzten Flüssigkeit zu deren Prüfung versehen ist.

20. Vorrichtung nach Anspruch 19, versehen mit einer Steuerung, die geeignet ist, in Abhängigkeit von der Prüfung eine zweite Menge an Flüssigkeit aufzubringen, um ein gewünschtes Flüssigkeitsaufbringungsmuster zu erhalten.

## Revendications

1. Procédé destiné à fabriquer un filtre de couleur (2) et / ou une matrice à fond noir, dans lequel un liquide (5) est déposé sur un substrat (3) à l'aide d'une tête d'impression à jet d'encre (4), **caractérisé en ce que** la position du dépôt de liquide est déterminée **en ce qu'**une matrice (6) d'éléments lumineux (7) est agencée sous le substrat (3), dans lequel un élément lumineux ou un groupe d'éléments lumineux de la matrice d'éléments lumineux sont mis en service, de telle sorte qu'ils s'éclairent, dans lequel la position de l'élément lumineux ou du groupe d'éléments lumineux est observée, et dans lequel la position du dépôt de liquide est déterminée selon la position observée du ou des éléments lumineux (7) ou du groupe d'éléments lumineux.

2. Procédé selon la revendication 1, dans lequel le substrat (3) est une couche d'un dispositif d'affichage (10) et dans lequel les éléments lumineux (7) font partie du dispositif d'affichage (10) à doter du filtre de couleur (2) et / ou d'une matrice à fond noir.

3. Procédé selon la revendication 1, dans lequel le substrat (3) comprend un élément transparent qui est placé, après avoir déposé le liquide (5) sur celui-ci, sur un dispositif d'affichage, dans lequel la structure des éléments lumineux (7) fait partie d'un appareil de production (1) de filtres de couleur (2) et / ou de matrices à fond noir.

4. Procédé selon l'une quelconque des revendications précédentes, dans lequel seuls les éléments lumineux (7) sont mis en service au-dessus desquels le liquide de filtre (5) ou à côté desquels l'encre destinée à former la matrice à fond noir, respectivement, doit être déposé.

5. Procédé selon l'une quelconque des revendications précédentes, dans lequel les éléments lumineux (7) sont mis en service seulement peu de temps avant le dépôt de liquide et au cours de celui-ci, au-dessus de cet élément respectif.

6. Procédé selon l'une quelconque des revendications précédentes, dans lequel les éléments lumineux (7) de la structure de matrice (6) du substrat (3) émettent une lumière blanche.

7. Procédé selon l'une quelconque des revendications précédentes, dans lequel le substrat (3) est réalisé en verre.

8. Procédé selon l'une quelconque des revendications précédentes, dans lequel l'observation de l'élément lumineux ou du groupe d'éléments lumineux se fait à l'aide d'un capteur de lumière au moins disposé sur la tête d'impression à jet d'encre.

9. Procédé selon la revendication 8, dans lequel le ou les capteurs de lumière (8) fournissent à la tête d'impression (4) et / ou à la buse (9) un signal destiné à commander la tête d'impression (4) et / ou la buse (9).

10. Procédé selon la revendication 8 ou la revendication 9, dans lequel, après le dépôt de liquide, la position du liquide déposé est contrôlée avec les mêmes capteurs (8) ou avec des capteurs supplémentaires disposés sur la tête d'impression à jet d'encre (4).

11. Procédé selon la revendication 10, dans lequel, en fonction du contrôle, une seconde quantité de liquide est déposée de façon à obtenir un motif de dépôt de liquide souhaité sur le substrat (3).

12. Appareil (I) destiné à exécuter le procédé selon l'une quelconque des revendications précédentes, dans lequel l'appareil (I) est doté d'un support (1) destiné à recevoir sur celui-ci un substrat (3), d'une tête d'impression à jet d'encre (4) destinée à fournir un liquide (5) à un instant souhaité, et d'un ensemble de déplacement destiné à déplacer la tête d'impression (4) par rapport au substrat (3), **caractérisé en ce que** l'appareil comprend un capteur de lumière (8) au moins destiné à l'observation d'éléments lumineux (7) mis en service, et une commande destinée à traiter les signaux fournis par le ou les capteurs de lumière (8), de façon à réguler le déplacement de l'ensemble de déplacement et à synchroniser la fourniture de liquide (5) par la tête d'impression (4) sur la base du signal fourni par le ou les capteurs de lumière (8).

13. Appareil (I) selon la revendication 12, dans lequel la position du ou des capteurs de lumière (8) est fixe par rapport à la tête d'impression (4).

14. Appareil (I) selon la revendication 12 ou la revendication 13, dans lequel la tête d'impression (4) comprend une buse (9) au moins.

15. Appareil (I) selon l'une quelconque des revendications 12 à 14, dans lequel l'ensemble de déplacement est agencé de façon à déplacer la tête d'impression (4) par rapport au substrat (3), dans lequel la tête d'impression (4) ou le support (1) peut être déplacé.

16. Appareil (I) selon l'une quelconque des revendications 12 à 15, dans lequel la tête d'impression (4) est dotée d'un certain nombre de buses (9) agencées les unes à côté des autres, de telle sorte qu'un certain nombre de zones puissent être remplies sensiblement de manière simultanée.

17. Appareil (I) selon l'une quelconque des revendications 12 à 16, dans lequel la tête d'impression (4) peut être déplacée dans la direction transversale par rapport au substrat (3) grâce au déplacement de la tête d'impression (4) ou du support (1).

18. Appareil (I) selon l'une quelconque des revendications 12 à -17, dans lequel la tête d'impression (4) peut être déplacée dans la direction longitudinale par rapport au substrat (3) grâce au déplacement de la tête d'impression (4) ou du support (1).

19. Appareil (I) selon l'une quelconque des revendications 12 à 15, dans lequel la tête d'impression (4) est dotée de capteurs destinés à observer la position du liquide déposé, en tant que contrôle de celle-ci.

20. Appareil selon la revendication 19, doté d'une commande agencée de façon à déposer, en fonction du contrôle, une seconde quantité de liquide de manière à obtenir un motif de dépôt de liquide souhaité.
